(19) Europäisches Patentamt
European Patent Office
Office européen des brevets

(11) **EP 3 112 242 A1**

(12) # DEMANDE DE BREVET EUROPEEN

(43) Date de publication:
**04.01.2017 Bulletin 2017/01**

(51) Int Cl.:
***B62K 25/02*** *(2006.01)*

(21) Numéro de dépôt: **16001408.0**

(22) Date de dépôt: **23.06.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **29.06.2015 FR 1501362**

(71) Demandeur: **MAVIC S.A.S.**
**74370 Metz-Tessy (FR)**

(72) Inventeur: **Mercat, Jean-Pierre**
**74650 Chavanod (FR)**

(74) Mandataire: **Rambaud, Pascal**
**Salomon S.A.S.**
**D.J.P.I.**
**74996 Annecy Cedex 9 (FR)**

(54) **BROCHE DE FIXATION ET MOYEU POUR ROUE DE CYCLE**

(57) Broche de fixation (300) d'une roue sur un cycle, comprenant une tige (310) qui s'étend selon un axe longitudinal, une première extrémité qui comporte des moyens coopérant avec le cadre dudit cycle et une deuxième extrémité qui comprend des moyens susceptibles de coopérer avec un dispositif exerçant un couple de serrage, dans laquelle : ladite tige (310) comporte une gorge (318) qui s'étend selon ledit axe longitudinal sur une longueur L1 ; un élément de diamètre variable et de longueur L2, la longueur L2 étant inférieure à L1, est reçue dans la gorge (318) de manière à être mobile en translation selon l'axe longitudinal ; et un moyen élastique (330) contraint longitudinalement ledit élément de diamètre variable en direction de la deuxième extrémité.

Fig. 1

EP 3 112 242 A1

# Description

DOMAINE DE L'INVENTION

La présente invention concerne le domaine des cycles et plus particulièrement les ensembles de fixation rapide d'une roue de cycle à une fourche de cadre de cycle.

Elle trouvera pour application particulière les ensembles de fixation de roues de vélo de route et de vélo tout terrain.

L'invention concerne un ensemble de fixation, une broche et un moyeu pour un tel système ainsi qu'une roue et un cycle équipé d'un tel moyeu et d'un tel ensemble.

ETAT DE LA TECHNIQUE

De façon connue, une roue de cycle comprend un moyeu, une jante destinée à recevoir une bande de roulement et des rayons ou des disques assurant la liaison mécanique entre le moyeu et la jante.

Le moyeu comprend un corps de moyeu configuré pour être fixé aux rayons ou aux disques et un arbre du moyeu assurant la liaison mécanique du moyeu avec une fourche avant ou arrière d'un cadre de cycle.

La fourche comprend habituellement deux pattes de fixation qui se fixent chacune à l'une des extrémités de l'arbre du moyeu. Ce dernier est donc fixe en rotation lorsque la jante tourne.

Pour une pratique sportive du vélo, il est nécessaire de pouvoir désolidariser rapidement et sans outillage la roue et la fourche afin de pouvoir par exemple dépanner rapidement un coureur cycliste ayant subi une crevaison ou tout simplement pour faciliter le transport ou le rangement du vélo.

Plusieurs solutions ont été proposées afin de réaliser une fixation rapide de la roue sur la fourche.

Ces solutions reposent toutes sur l'utilisation d'une broche qui traverse l'arbre du moyeu, avec de chaque côté du moyeu, une extrémité de la broche formant saillie. Chaque extrémité de la broche coopère avec l'une des pattes de fixation de la fourche pour permettre une fixation de la broche sur la fourche en configuration verrouillée et pour permettre de retirer la broche de la fourche en configuration déverrouillée.

Une première solution consiste à insérer chacune des extrémités de la broche dans l'un des deux alésages portés par les pattes de fixation. Le document EP0810944 décrit ce type de solution. Chaque alésage des pattes de fixation présente une fente de passage faisant communiquer l'alésage avec l'extérieur et permettant d'insérer la broche de l'alésage en effectuant un mouvement permettant de passer au travers des fentes de passage. Ce mouvement est un mouvement principalement vertical lorsque le cycle est en configuration de roulage.

Un inconvénient de ce type de solution est qu'en cas de mauvais serrage de la broche sur la fourche, la broche peut sortir des alésages en passant par les fentes de passage. La roue peut alors se désolidariser du cadre en phase de roulage ce qui peut entraîner une chute aux conséquences dramatiques.

Pour améliorer la sécurité du cycliste, une autre solution prévoit des pattes de fixation sur la fourche dont les alésages sont fermés, c'est-à-dire qu'ils ne comprennent pas de fente de passage. Il faut donc insérer la broche à travers ces alésages selon une direction correspondant à l'axe de rotation de la roue. L'un des alésages forme un taraudage à l'intérieur duquel se visse une extrémité filetée de la broche. Cette solution est satisfaisante en termes de sécurité. En revanche, elle présente pour inconvénient de devoir retirer entièrement la broche du moyeu lors d'un changement de roue, ce qui est long et fastidieux.

Pour remédier à cet inconvénient, une autre solution telle que celle décrite dans le document US 6,089,675 prévoit une fourche dont une première patte de fixation comprend un alésage taraudé sans fente de passage et dont une deuxième patte de fixation comprend un alésage non fileté se poursuivant verticalement par une fente de passage. On peut ainsi amener l'ensemble (le moyeu et la broche) au regard des deux alésages en passant la broche par la fente de passage du deuxième alésage puis en effectuant un déplacement selon l'axe de la broche pour mettre en prise l'extrémité filetée de la broche avec l'alésage taraudé de la première patte de fixation.

Ce document décrit plusieurs modes de réalisation où la broche est poussée axialement par un ressort afin de pré-engager l'extrémité filetée de la broche dans le taraudage du premier alésage.

Le document US 2013/0270893 décrit une amélioration du document précédent en ajoutant un système d'indexage axial de la broche afin que cette broche ait une position ouverte stable malgré la poussée axiale du ressort de rappel.

Ces solutions ont pour inconvénient d'empêcher ou de rendre très complexe l'extraction de la broche hors du moyeu. Or cette extraction est nécessaire pour assurer le nettoyage de ces organes essentiels aux performances du cycle ou pour changer de roue tout en conservant la même broche.

Ces solutions ont également une conception du moyeu très spécifique ne les rendant pas compatibles avec les broches existantes du marché, ainsi une roue de ce type ne pourra être installée sur un vélo ayant une fourche à broche standard comportant deux alésages fermés (sans fente de passage), cet inconvénient d'incompatibilité limite grandement l'adoption de ce concept depuis le cycliste final en passant par le réseau de distribution et jusqu'au fabricant de moyeu.

Par ailleurs, la manipulation de la broche s'avère complexe.

Il existe donc un besoin consistant à proposer une solution pour pallier certains des inconvénients mentionnés ci-dessus.

Il serait notamment très avantageux de disposer d'une solution, robuste, fiable et économique permettant de réduire, voire d'éviter, les risques de décrochage involontaire de la roue tout en permettant un démontage facilité de celle-ci, une extraction aisée de la broche hors du moyeu et une inter-compatibilité de ce moyeu avec les fourches et broches existantes déjà présentes sur le marché.

Description de l'invention

L'objectif de l'invention est atteint par la fourniture d'une broche de fixation d'une roue sur un véhicule de type cycle, comprenant une tige qui s'étend selon un axe longitudinal, une première extrémité qui comporte des moyens coopérant avec le cadre dudit véhicule et une deuxième extrémité qui comprend des moyens susceptibles d'exercer un couple de serrage, dans laquelle :

- ladite tige comporte une gorge dont l'extension selon ledit axe longitudinal a une longueur L1,
- un élément de diamètre variable et de longueur L2, la longueur L2 étant inférieure à L1, est reçu dans la gorge de manière à être mobile en translation selon l'axe longitudinal,
- un moyen élastique contraint longitudinalement ledit élément de diamètre variable en direction de la deuxième extrémité.

De préférence, sur l'ensemble de sa longueur, le diamètre extérieur de ladite tige ne dépasse pas une valeur D1 et le diamètre D2 de l'élément de diamètre variable lorsqu'il est à l'état libre est supérieur au diamètre maximal de la tige D1.

De préférence, l'élément de diamètre variable est un élément élastique, par exemple une bague tubulaire fendue dont le diamètre à l'état libre D2 est supérieur au diamètre extérieur maximal D1 de la tige.

De préférence, le moyen élastique qui contraint longitudinalement l'élément de diamètre variable est un ressort à spirales de diamètre inférieur à D1.

De préférence, une bague de répartition est interposée entre le ressort et l'élément de diamètre variable.

De préférence, les moyens placés à la première extrémité qui coopèrent avec le cadre du véhicule sont un filetage et/ou les moyens placés à la deuxième extrémité qui sont susceptibles de coopérer avec un dispositif exerçant un couple de serrage sont un levier et/ou une empreinte de clé.

L'objectif de l'invention est également atteint par la fourniture d'un ensemble constitué par une broche ayant les caractéristiques mentionnées dans les cinq paragraphes précédents et un moyeu d'une roue de véhicule, ledit moyeu comportant un arbre creux, dont une portion au moins présente un diamètre intérieur D3 et dont les autres portions ont un diamètre intérieur supérieur à D3 ainsi qu'un corps de moyeu monté rotatif sur l'arbre ; caractérisé en ce que le diamètre D3 est supérieur au diamètre maximal de la tige D1 et D3 est inférieur au diamètre D2 de la bague à l'état libre.

Dans un autre mode de réalisation de l'invention, des moyens de rétention libérable sont prévus entre le moyeu et la broche de manière à maintenir celle-ci dans une position déterminée par rapport au moyeu.

De préférence, les moyens de rétention libérable comprennent une protrusion annulaire interne ménagée à l'intérieur de la bague de répartition qui est apte à coopérer avec une protrusion annulaire externe ménagée à la superficie de la tige dans la gorge. Les protrusions annulaires comportent des portions coniques de demi-angle au sommet $\alpha$ compris entre 50° à 65°.

Dans un mode de réalisation de l'invention la tige de broche comprend deux parties distinctes qui sont assemblées l'une à l'autre pour constituer la tige de broche complète, la gorge recevant la bague expansible se trouvant à l'interface entre les deux parties.

Dans un autre mode de réalisation de l'invention, les moyens de rappel comprennent deux ou plusieurs ressorts disposés régulièrement à la circonférence de la tige de broche.

Brève description des figures

- La figure 1 est une vue en perspective de l'ensemble moyeu et broche selon un premier mode de réalisation de l'invention
- la figure 2 est une vue en coupe illustrant la première insertion de la broche dans le moyeu.
- La figure 3 est une vue en coupe illustrant la position de la broche à l'issue de la première insertion par poussage de la broche, et avant le vissage de celle-ci.
- La figure 3a est une en coupe transversale de la patte de fixation et de la broche dans la position que cette dernière prend à la figure 3
- La figure 4 est une vue en coupe illustrant l'ensemble en position de serrage complet.
- La figure 4a est une vue de détail agrandie de la figure 4.
- La figure 4b est une vue de détail de la figure 4 en coupe transversale.
- La figure 5 est une vue en coupe illustrant l'ensemble en position montage ou démontage de roue sans qu'il y ait extraction complète de la broche.
- La figure 5a est une vue de détail agrandie de la figure 5.
- La figure 5b est une en coupe transversale de la patte de fourche et de la broche dans la position que cette dernière prend à la figure 5.
- La figure 5c est une en coupe transversale de la patte de fixation et de la broche lors du retrait de la roue.

- La figure 6 est une vue d'ensemble en coupe illustrant un second mode de réalisation représenté en position montage ou démontage de roue sans extraction complète de la broche, ce second mode de réalisation comportant un dispositif permettant d'assurer la stabilité de cette position.
- La figure 6a est une vue détaillée partielle de la figure 6.
- La figure 7 est une vue détaillée du second mode de réalisation de la figure 6 mais représentée en position de serrage complet.
- Les figures 8 et 9 sont des vues en coupe longitudinale d'un troisième mode de réalisation de l'invention.
- Les figures 10, 11, 12, 13 et 14 sont des vues en coupe transversale du troisième mode de réalisation de l'invention.
- La figure 15 est une vue en coupe transversale d'un quatrième mode de réalisation de l'invention.

Description détaillée

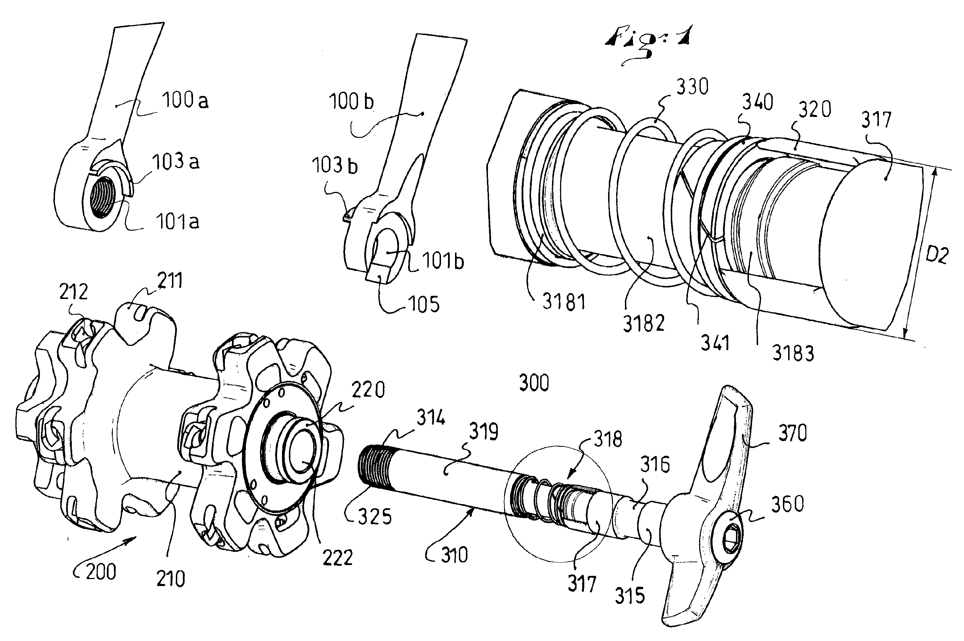

Un premier exemple de réalisation de la présente invention va maintenant être décrit en référence aux figures 1 à 6.

La figure 1 fait apparaître les bras de fourche et les pattes de fixation 100a, 100b d'une fourche de cadre.

La patte de fixation 100a présente à son extrémité un alésage 101a. Cet alésage 101a est fermé, c'est-à-dire que son pourtour ne présente pas d'ouverture. Il est de préférence taraudé.

La patte de fixation 100b présente un alésage 101b dont le pourtour est ouvert par une fente de passage 105. La largeur de la fente 105 est inférieure au diamètre de l'alésage 101 b de façon à ce que la fente constitue un rétrécissement de l'alésage.

Le moyeu 200 présente un corps de moyeu 210 présentant deux flasques 211 comportant une pluralité de logements 212 pour des têtes de rayons non représentées. Le reste de la roue du cycle, à savoir les rayons, la jante, le pneumatique, ne sont également pas représentés.

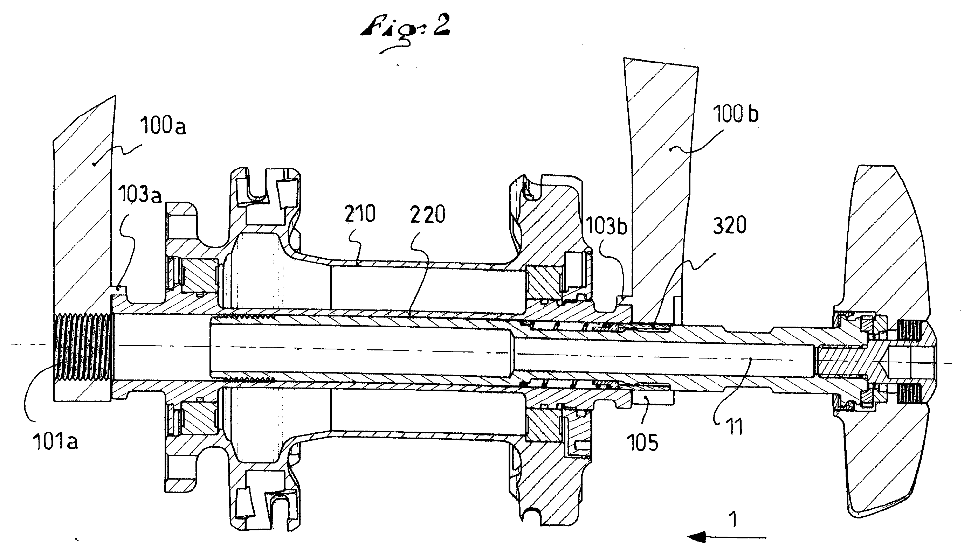

Le moyeu 200 comporte également un arbre 220 de moyeu logé dans le corps 210 de moyeu et destiné à être fixé sur la fourche. Lorsque la roue est fixée, l'arbre 220 est immobilisé en translation et en rotation par rapport à la fourche. Ainsi, le corps 210 de moyeu tourne sur l'arbre 220 de moyeu autour d'un axe 11 référencé en figure 2.

L'arbre 220 de moyeu présente un passage interne 222 qui s'étend de préférence sur toute sa longueur et qui est configuré pour être traversé par une tige 310 de broche 300.

La tige 310 de broche comprend une extrémité 314 configurée pour pénétrer dans l'alésage 101a. De préférence, cette extrémité 314 est filetée et se visse dans le taraudage de l'alésage 101a.

Les premiers filets à partir de l'extrémité ont été tronqués de manière à constituer un bout 325 non fileté.

La tige 310 de broche comprend sur sa surface externe plusieurs portions 315, 316, 317, 318, 319 qui seront décrites ultérieurement.

L'extrémité de la tige 310 opposée à l'extrémité filetée 314 est configurée pour pénétrer dans l'alésage 101b, de préférence au travers de la fente de passage 105 comme cela sera décrit en détail par la suite. Cette extrémité est associée à une poignée 370 destinée à être manoeuvrée, par exemple poussée, tournée, tirée par l'utilisateur pour respectivement engager la broche de l'alésage 101a, la visser dans cet alésage 101a ou la retirer de la fourche.

La broche comprend une gorge 318 qui s'étend selon l'axe longitudinal sur une longueur L1. Cette gorge 318 reçoit, un élément de diamètre variable, qui prend, dans ce mode de réalisation, la forme d'une bague tubulaire fendue 320 ; un moyen élastique, sous la forme d'un ressort 330 et une bague de répartition 340 qui s'intercale entre les deux éléments précédents.

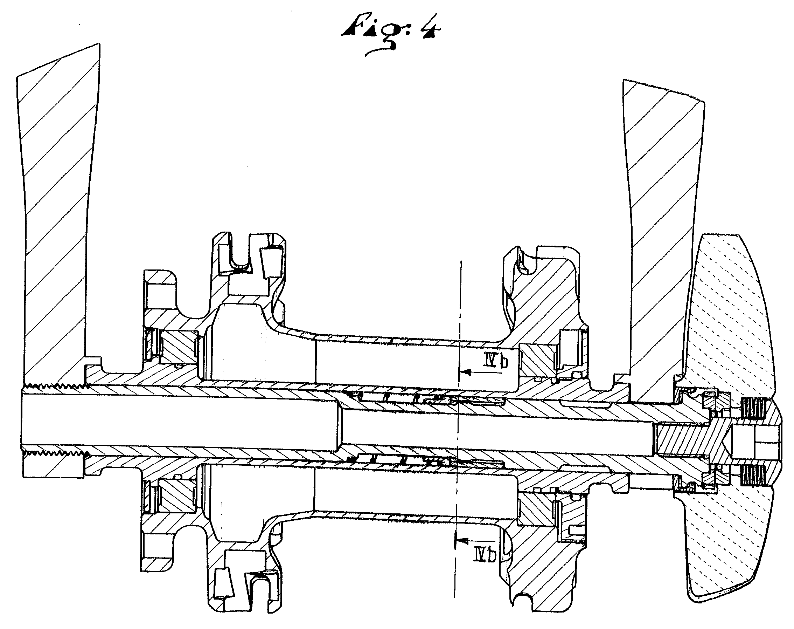

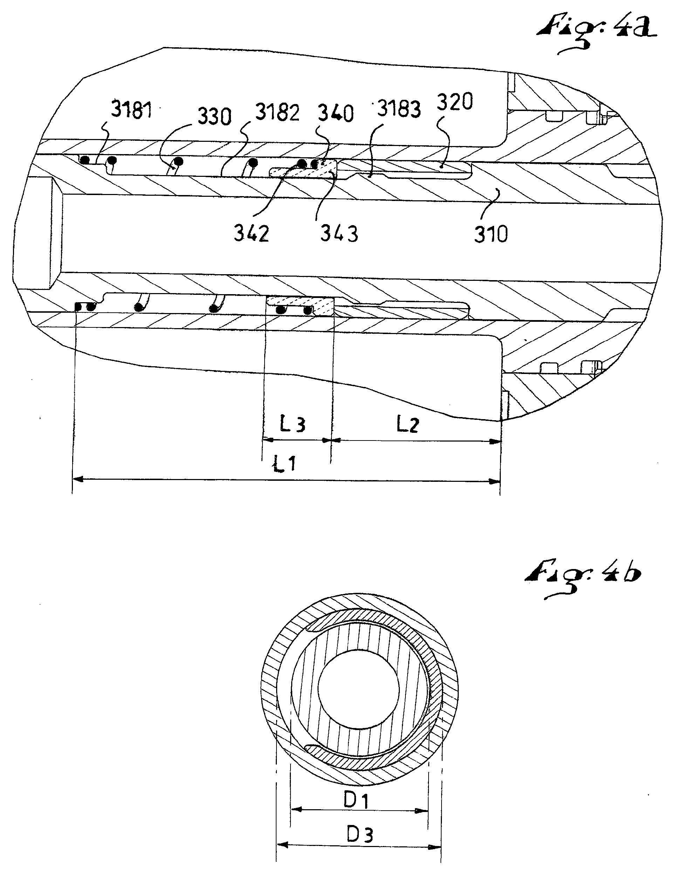

Comme on peut le voir à la figure 4a, le fond de la gorge ne présente pas un diamètre identique sur toute la longueur de celle-ci. Différentes sections de la gorge sont ainsi définies. En partant depuis l'extrémité de la gorge qui est la plus proche de l'extrémité 314 de la broche, se trouve une section de centrage 3181 du ressort, une section de coulissement 3182 de la bague de répartition 340 et une section de centrage 3183 de la bague rétractable 320.

Dans le mode de réalisation décrit ici, la tige de la broche est faite d'un seul bloc, si bien qu'il est nécessaire de prévoir une fente 341 dans la bague de répartition afin de permettre le montage. De préférence on choisira une bague de répartition avec une fente dont l'orientation fait un angle non nul avec l'axe 11. Ainsi la déformation de la bague lors du montage risque moins de l'abimer par plastification. Pour les mêmes raisons de montage, on choisira un ressort dont les propriétés mécaniques lui permettent une expansion radiale suffisante pour passer par-dessus des portions de la tige qui ont un diamètre extérieur plus important que le diamètre du ressort.

D'autres modes de réalisation comprennent une tige de broche faite d'au moins deux morceaux avec une interface entre les deux morceaux passant par la gorge 318. La mise en place des différents éléments dans la gorge ne pose alors plus de problème et on peut utiliser une bague de répartition et un ressort non déformable radialement. Ces modes de réalisation peuvent notamment comporter 2 pièces vissées, bloquées et éventuellement collées l'une dans l'autre tout en s'assurant que le dévissage ne puisse se produire lors de l'utilisation. De tels modes de réalisation seront décrits plus loin.

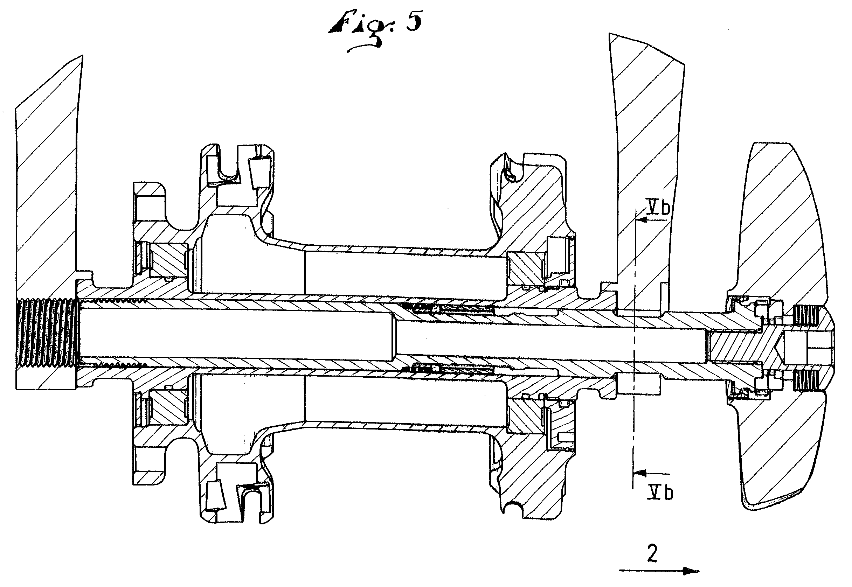

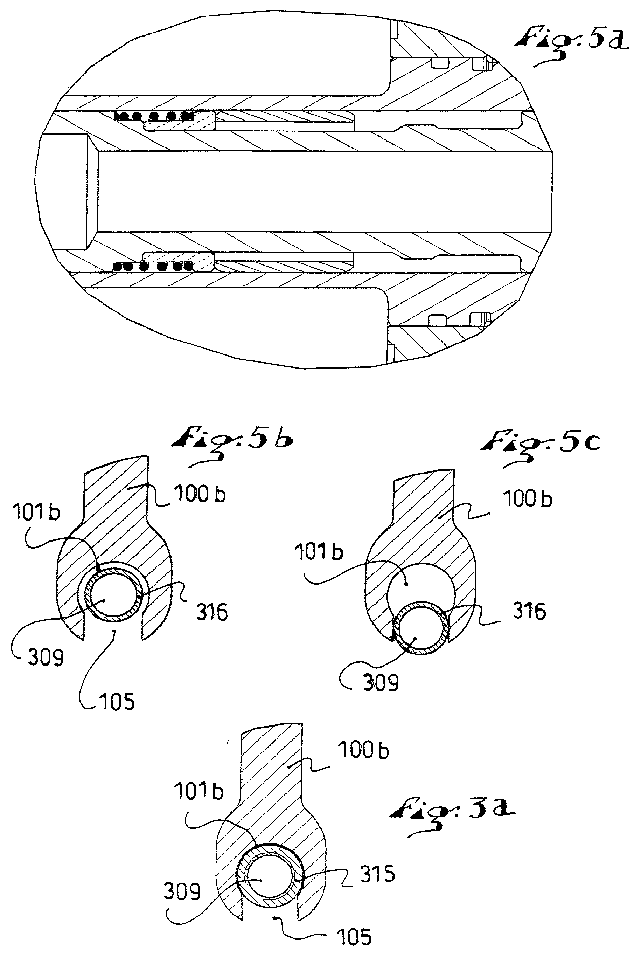

Il convient également de préciser que la gorge 318 est ménagée dans la partie centrale de la tige et non pas aux extrémités de celle-ci. En effet, lorsque la broche est en place dans le moyeu, la gorge doit se trouver intégralement à l'intérieur de celui-ci. Cela est visible sur les figures 4 et 5 qui correspondent aux conditions d'utilisation les plus courantes de la broche dans un moyeu de roue de bicyclette. En pratique la gorge 318 est placée à une distance d'au moins 40 mm du bout 325 de la broche. Dans le premier mode de réalisation, la gorge se situe à 90 mm du bout de la broche.

La bague de répartition 340 comprend une portion de centrage du ressort 342 et une portion de butée 343, sur laquelle prend appui la bague tubulaire.

Dans le premier mode de réalisation, la bague tubulaire fendue 320 présente une longueur L2 comprise entre 2 et 30 mm, de préférence comprise entre 5 et 15 mm. On obtient de bons résultats avec une bague de longueur 10 mm.

Le diamètre externe D2 de la bague tubulaire 320 est, à l'état libre, supérieur aux diamètres extérieurs de toutes les portions 315, 316, 317, 318 et 319 de la tige 310. En pratique le diamètre des portions 315, 317 et 319 est sensiblement identique et sera nommé D1. Le diamètre D1 correspond au diamètre extérieur maximal de la tige 310.

Cette bague peut être obtenue à partir d'une feuille d'acier roulée, de préférence dans un acier à haute limite élastique. Elle peut également être dans un alliage d'alu à hautes caractéristiques mécaniques, comme du 7075.

De préférence, les arêtes frontales de la bague sont rayonnées par tonnelage pour faciliter l'insertion de celle-ci dans le passage interne 222, comme nous le verrons plus loin.

La première fixation du moyeu 200 de la roue à la fourche à l'aide de la broche selon l'invention va maintenant être décrite.

La figure 2 illustre en coupe longitudinale une phase de la première insertion de la broche 300 dans le moyeu 200. Il peut s'agir également de la réinsertion de la broche 300 dans le moyeu. Au préalable, la broche a été entièrement extraite du moyeu.

L'utilisateur a placé la roue à l'emplacement adéquat. Les surfaces d'appui du moyeu 221a et 221b sont en butée respectivement contre les butées verticales 103a et 103b. Le passage interne 222 de l'arbre du moyeu 220 est aligné avec les alésages 101a et 101b des pattes de fixation 100a et 100b.

Pour pouvoir faire pénétrer la broche, l'utilisateur exerce, selon le sens d'engagement 1, un effort axial.

C'est au travers des surfaces d'appui 221a, 221b et des butés 103a, 103b que le poids du cycle et de l'utilisateur est transmis à la roue. Ainsi, la broche 300 ne reprend pas ou que très peu de la charge verticale, ce qui ne gêne donc pas son déplacement axial et rend l'ensemble plus robuste.

L'effort axial exercé par l'utilisateur doit être suffisant pour permettre, d'une part, de contraindre la bague 320 à réduire son diamètre et pour la faire glisser à l'intérieur du passage interne. En effet, le diamètre extérieur de la bague, à l'état libre, D2 est supérieur au diamètre intérieur D3 du passage interne 222 de l'arbre 220. La bague vient générer un effort radial réparti sur le passage interne 222. Le coefficient de frottement « f » entre la bague et le passage interne 222 va permettre de transmettre un effort axial Fa sensiblement proportionnel à l'effort radial précité et au coefficient de frottement entre la bague et le passage interne. Ainsi, si l'on exerce un effort inférieur à Fa, la bague reste immobile dans le passage interne. La bague ne commence à se déplacer que lorsqu'on dépasse ce seuil, dans un sens comme dans l'autre.

Le passage interne et la bague ayant leur propre tolérance de fabrication, l'insertion de la broche dans le passage interne va induire un serrage de la bague (rétractation de son diamètre extérieur) variable. Il est donc nécessaire que le serrage nominal soit bien supérieur aux intervalles de tolérance.

A titre d'exemple pour un moyeu dont le diamètre intérieur D3 du passage interne varie entre 12,02 et 12,12 mm, on dimensionne le diamètre extérieur maximal de la tige D1 à 12,00 mm et celui de la bague D2 entre 12,45 et 12,55 mm. On peut calculer ainsi le serrage maxi qui est égal à 0,53 mm et le serrage mini qui est de 0,33 mm. La variation de serrage est donc, dans ce cas d'environ +/- 25%, ce qui est acceptable pour l'application.

En choisissant une bague en acier de diamètre 12,50 mm, de longueur 10 mm, et d'épaisseur 0,85 mm, l'effort Fa est d'environ +/- 45 N selon la direction du déplacement de la broche. L'effort Fa est proportionnel (facteur k) à la longueur de la bague ($L_2$), au serrage nominal (S) et au coefficient de frottement (f).

$$Fa = k. L_2. S. f$$

Le facteur k est notamment fonction du module du matériau de la bague et de l'épaisseur de celle-ci.

L'utilisateur exerce pendant toute cette phase une poussée selon l'axe 11.

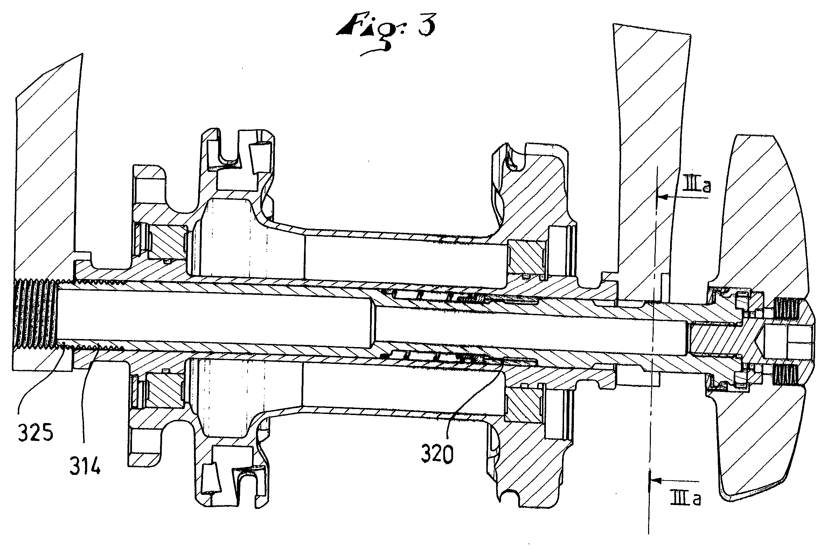

La figure 3 illustre en coupe longitudinale la fin de la phase de poussée. Le bout 325 de la tige 320 est maintenant inséré dans l'alésage 101a. On notera également, que la portion 315 est alors déjà partiellement insérée dans l'alésage 101b. La roue est déjà prisonnière du cadre du cycle. En effet, comme on peut le voir à la figure 3a, le diamètre de la portion 315 est supérieur à la largeur de la fente de passage 105.

Par conséquent, bien que le processus de fixation ne soit pas terminé, on dispose dans cet état d'une première sécurité.

Pour finaliser le processus de fixation de la roue, l'utilisateur exerce un couple afin de visser l'extrémité fileté 314 dans le taraudage de l'alésage 101a. La figure 4 illustre la fin de cette opération de vissage et l'état de la broche lorsque la roue est solidement fixée au cadre du cycle. La figure 4a, qui est une vue de détail de la figure 4 montre quelle est la position finale atteinte par la bague 320 à l'issue de la première insertion de la broche. Tant qu'on n'extraira pas complètement la broche 300 du moyeu 200, cette position ne variera pas. Ainsi, lors d'un simple démontage de roue, la bague conservera la même position axiale par rapport au moyeu. La bague constitue alors en fait une butée axiale solidaire du moyeu sur laquelle s'appuie le ressort qui contraint la broche vers son engagement dans la patte de fourche. Cette butée axiale ne sera pas affectée tant que l'effort axial exercé sur la broche selon le sens d'extraction 2 ne dépassera pas le seuil d'effort Fa, nécessaire pour faire glisser la bague.

Dans le mode de réalisation représenté, le couple peut s'exercer à la main grâce à la poignée de broche 370 ou par l'intermédiaire d'une clé. Un limiteur de couple tel que celui décrit dans la demande de brevet EP 2 070 725 est disposé à l'intérieur de la poignée.

Nous allons maintenant expliquer le processus de démontage et de remontage de la roue sans extraction complète de la broche. Le démontage commence par une opération de desserrage de la broche. A l'issue de cette opération, la broche se retrouve dans la position décrite à la figure 3, à l'exception de la bague 320 qui elle n'est pas la position de la figure 3, mais dans celle de la figure 4.

Il est à noter que dans cet état également, l'utilisateur bénéficie d'un certain niveau de sécurité car sans intervention supplémentaire de sa part, la roue ne peut quitter son emplacement.

Pour pouvoir extraire la roue, l'utilisateur doit exercer un effort de traction sur la broche selon le sens d'extraction 2. Cet effort doit être suffisant pour contrer l'effort de rappel du ressort mais inférieur à l'effort Fa précité.

La traction qu'exerce l'utilisateur sur la poignée de la broche contraint le ressort 330 jusqu'à ce que la portion 342 de centrage de ressort de la bague de répartition 340 arrive en butée avec la portion de la gorge 318 qui constitue une section de centrage 3181 du ressort.

La broche se trouve alors dans la position illustrée aux figures 5, 5a et 5b. L'extrémité fileté 314 et le bout 325 de la broche sont hors de l'alésage 101a. Ils sont affleurant avec la surface frontale de l'arbre de moyeu 220 et ne font pas saillie de ce-dernier.

D'autre part, la portion de la tige 310 de broche qui se trouve au regard de l'alésage 101b est la portion d'extraction de roue 316 qui présente un diamètre extérieur inférieur au diamètre extérieur maximal D1 de la tige et également inférieur à la largeur de la fente de passage 105 ménagée dans la patte de fixation 100b.

Les figures 5b et 5c illustrent comment il est alors possible d'extraire la roue des pattes de fixation. La portion d'extraction 316 est à même de passer dans la fente 105.

Il est nécessaire que l'utilisateur maintienne pendant toute l'opération d'extraction de la roue l'effort de traction sur la poignée de la broche. En effet, la position illustrée à la figure 5, n'est pas une position stable car le ressort contraint la broche à retourner dans la position de la figure 3.

Une fois que la roue est extraite des pattes de fixation, la broche reprendra naturellement sa position d'équilibre à l'intérieur du moyeu de la roue, c'est-à-dire celle qui est la sienne à la figure 3 à l'exception de la bague 320 qui, elle, n'est pas la position de la figure 3, mais dans celle de la figure 4.

Dans toute la phase de stockage de la roue, la broche restera solidaire de la roue. Il n'y a, en effet, aucun risque que la broche soit extraite malencontreusement du moyeu car il faudrait exercer un effort supérieur à Fa. De plus, avantageusement, la broche gardera le positionnement adéquat pour préparer le prochain montage de la roue sur le cycle.

Pour pouvoir remettre la roue, l'utilisateur exerce et maintien un effort limité (inférieur à Fa) sur la poignée de la broche dans le sens d'extraction 2. Il place ainsi la broche dans la position de la figure 5. Il est alors possible de venir placer la roue à son emplacement final en alignant le passage interne 222 du moyeu avec les alésages 101a et 101b.

Lorsqu'il relâche son effort de traction sur la poignée, la broche se place dans la position de la figure 3, la bague 320 étant dans la position de la figure 4. Il suffit alors d'appliquer le couple de serrage pour finaliser la fixation de la roue.

Pour le bon fonctionnement, il est nécessaire qu'avant l'arrivée à l'état fig 5 et à l'état 5 lui-même, la bague ne glisse pas, même sous l'effet de l'élan de l'utilisateur. Par conséquent, l'effort final du ressort F' doit être nettement inférieur à Fa. En définissant le ratio R = Fa/F', l'on doit s'arranger pour que ce ratio R soit supérieur à 2, de préférence supérieur à 5 et idéalement compris entre 8 et 80, à titre d'exemple le système donne entière satisfaction avec un effort de ressort maximal F' d'environ 5 Newton et un effort d'extraction Fa de la broche d'environ 50 Newton, soit un effort maximal du ressort F' environ 10 fois inférieur à Fa (R = 5/50 =1/10).

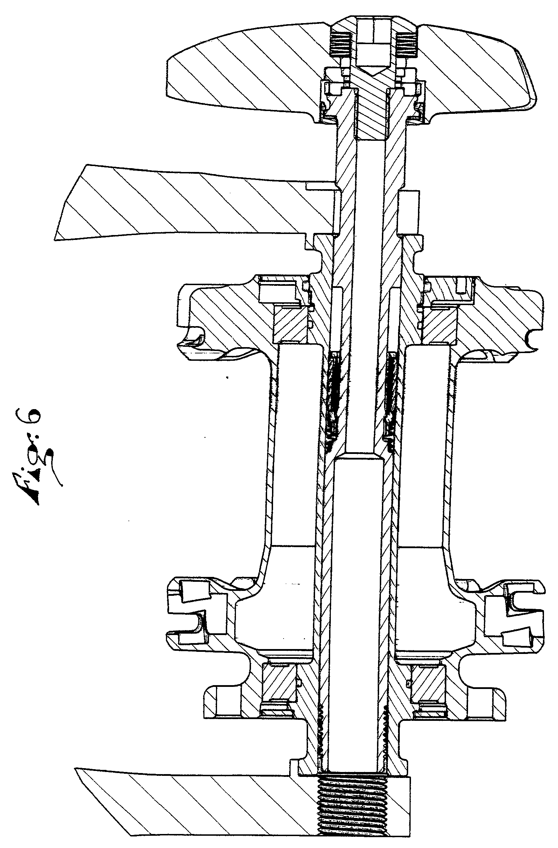

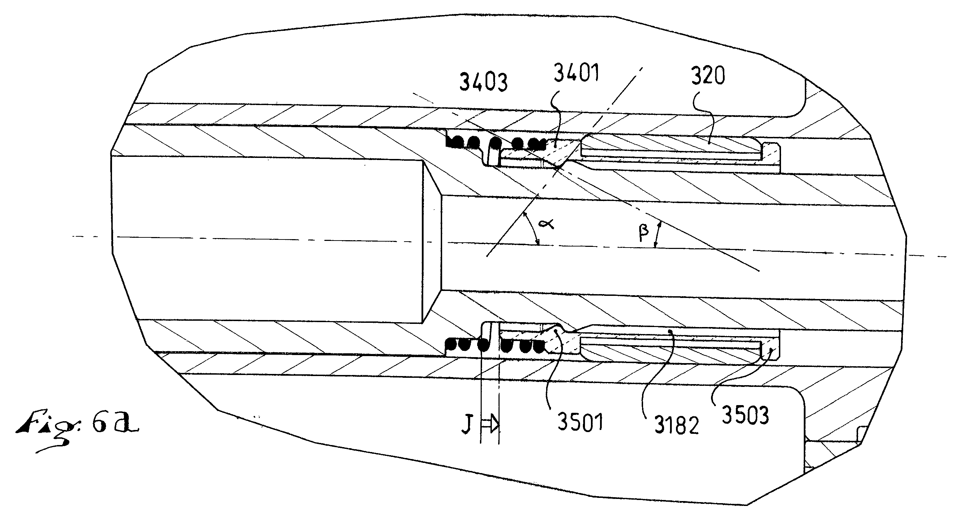

La figure 6 représente un second mode de réalisation dont la position de montage et de démontage de la roue possède une position stable de la tige de broche de sorte que l'effort de rappel du ressort 330 se trouve retenu par un système d'indexage. Ainsi, l'utilisateur ne doit pas obligatoirement exercer l'effort de traction sur la poignée de la broche continument pendant toute la phase d'extraction (ou de mise en place) de la roue.

En référence à la figure 6a qui est une vue partielle détaillée de la figure 6, ce mode de réalisation comporte toujours une bague tubulaire rétractable 320 qui vient s'insérer dans le logement interne 222 de l'arbre 220. La bague de répartition 3401 comporte au moins une fente 341 lui permettant de se dilater radialement afin de pouvoir être insérée dans la portion 319 de la tige 310. La fente 341 de la bague de répartition 3401 est dans ce mode de réalisation très étroite afin que lorsque le ressort 330 est inséré sur la zone de centrage 342 de la bague de répartition, il induise une contrainte radiale sur cette portion de centrage 342 permettant de refermer cette fente, la bague de centrage se trouve ainsi précontrainte en fermeture par l'extrémité du ressort 330. Dans ce second mode de réalisation, la bague de répartition 3401 est plus longue que dans le premier mode de réalisation et elle vient s'insérer radialement avec un jeu radial suffisant sous la bague fendue 320 pour prendre un autre appui axial 3503 à l'autre extrémité de cette dernière, ainsi la bague de répartition 3401 se trouve guidée par 2 appuis axiaux bilatéraux avec la bague fendue 320.

L'ensemble moyeu/broche selon le deuxième mode de réalisation de l'invention comporte des moyens de rétention libérable qui permettent de maintenir la broche dans une deuxième position d'équilibre stable. Ces moyens de rétention libérable sont prévus pour s'opposer à la force de rappel du ressort 330 qui tend à placer la broche dans une configuration similaire à celle illustrée à la figure 3. Ils sont constitués par la coopération d'éléments de la broche avec des éléments de la tige. Ces éléments vont être décrits ci-après.

La bague de répartition 3401 comporte dans son alésage une protrusion annulaire 3501 faisant saillie vers l'axe 11 et comportant deux portions coniques de demi-angle au sommet $\alpha$ et $\beta$ raccordées par un rayon.

La tige 3101 comporte dans sa portion 3182 une protrusion annulaire comportant également deux portions coniques de demi-angle au sommet $\alpha$ et $\beta$ raccordées par un rayon.

Ainsi en référence à la figure 6a, l'effort de rappel F' transmis par le ressort 330 à la bague de répartition 3401 se trouve contré par l'appui sur les portions de cône 3502 et 3102 d'angle $\alpha$ réalisées respectivement dans la bague de répartition 3501 et la tige de broche 310. La précontrainte radiale du ressort 330 sur l'extrémité de la bague plastique est suffisant pour ne pas qu'elle se dilate sous l'action du cône d'angle $\alpha$. Ainsi la position représentée à la figure 6a est bien une position d'ouverture stable malgré la poussée du ressort 330, permettant ainsi à l'utilisateur de monter et démonter sa roue sans devoir contrer manuellement l'action du ressort de rappel.

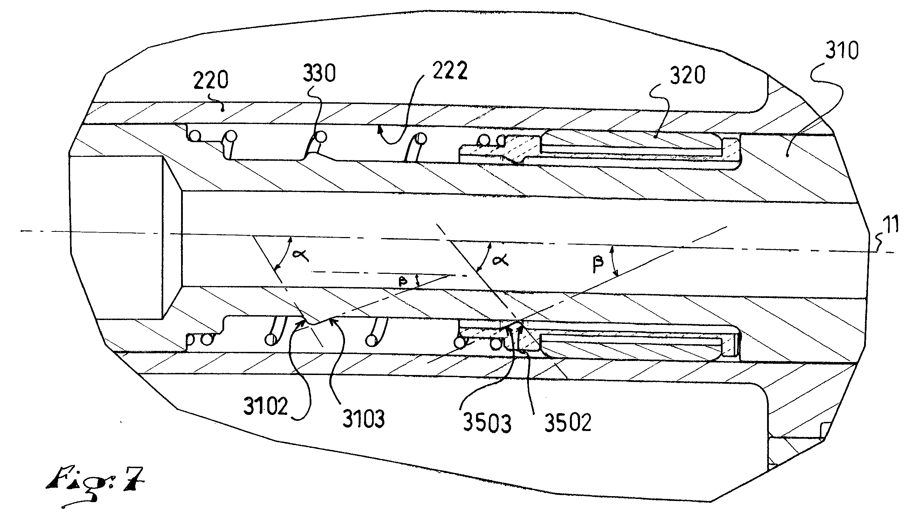

Nous allons maintenant décrire depuis cette position stable représentée aux figures 6 et 6a le passage à la figure 7 dans laquelle la roue se trouve solidement bloquée au cadre ou à la fourche du cycle. La figure 7 est une vue partielle détaillée d'une configuration de la broche qui mise à part la bague de répartition 3401 est tout à fait similaire à celle illustrée à la figure 4 du premier mode de réalisation.

En partant de la configuration illustrée à la figure 6, l'utilisateur va exercer une poussée axiale Pa dans le sens d'engagement 1 ainsi, en isolant la tige de broche 310, elle va se trouver poussée dans le sens 1, d'une part par le ressort de rappel 330 comme dans le premier mode de réalisation mais aussi par la poussée de l'utilisateur dans le sens 1 sur la poignée de broche 3701, la somme de ces deux actions se trouve dans un premier temps contrée par la réaction d'appui sur les portions de cône 3502 et 3102 d'angle $\alpha$ réalisées respectivement dans la bague de répartition 3501 et la tige de broche 310, la réaction du cône d'angle $\alpha$ va tendre alors à dilater la bague de répartition fendue et à dépasser le seuil de précontrainte radiale que le ressort 330 exerce sur l'extrémité de la bague de répartition, cette bague de répartition fendue va alors se dilater radialement et échapper au cône d'angle $\alpha$ pour aller s'engager sous l'action du ressort 330 dans le sens 1 vers une position comparable à la figure 3 du premier mode de réalisation.

Afin d'assurer une bonne stabilité et une grande facilité d'utilisation, il est souhaitable que le seuil d'effort Pa exercé par l'utilisateur sur la poignée pour basculer le système soit compris entre 0,5 et 3 fois l'effort de rappel maximal du ressort F' de sorte que l'effort de retenue des portions de cône 3502 et 3102 d'angle $\beta$, qui est égal à la somme de Pa et F', soit d'au moins 1,5 (1+0,5) et 4 (3+1) fois l'effort du ressort de rappel F'. Il est à noter que cet effort sera retransmis à la bague fendue 320 qui devra alors retransmettre à son tour cet effort axial par adhérence au logement interne 222 de l'arbre 220, il est donc nécessaire pour ce second mode de réalisation de dimensionner le serrage et la géométrie de la bague fendue 320 afin que l'effort d'extraction Fa soit nettement supérieur à Pa + F'.

En définissant le ratio R'= Fa/(Pa+F'), l'on doit s'arranger pour que ce ratio R' soit supérieur à 2, de préférence supérieur à 4 et idéalement compris entre 5 et 50, à titre d'exemple le système donne entière satisfaction avec un effort de ressort maximal F' d'environ 5 Newton, un effort Pa d'environ 5 Newton et un effort axial Fa d'environ 60 Newton soit un ratio R' égal à 6.

Afin de bien dimensionner le seuil d'effort de basculement Pa, il convient de bien dimensionner la précontrainte radiale du ressort sur la bague de répartition ainsi que l'angle $\alpha$ de la portion de cône afin d'atteindre le seuil voulu. L'angle $\alpha$ doit être assez ouvert pour bien retenir la poussée du ressort mais pas trop non plus pour que le système reste réversible sans arcbouter, l'angle $\alpha$ doit être de préférence compris entre 50° à 65°, un angle de 55° est un bon compromis.

Depuis cette position représentée à la figure 3, il suffit alors de tourner la poignée de broche 3701 pour venir visser la tige de broche et fixer solidement la roue au cadre. Cette dernière position correspond alors à la représentation détaillée à la figure 7.

Nous allons maintenant décrire l'opération qui consiste à déverrouiller la roue afin d'être démontée.

Depuis la figure 3 et la figure 7, l'utilisateur va tout d'abord dévisser la tige de broche en tournant la poignée de broche 370 dans le sens du dévissage pour arriver à une configuration similaire à celle représentée à la figure 3. A partir de cette position l'utilisateur va tirer sur la poignée de broche 370 en comprimant dans un premier temps le ressort 330, cette première phase est alors mécaniquement analogue à la représentation de la figure 7 jusqu'à ce que les portions cônes 3103 et 3503 d'angle β réalisées respectivement dans la bague de répartition 3401 et la tige de broche 310 viennent dilater la bague de répartition 3501 en dépassant la précontrainte radiale du ressort 330 et réarmer ainsi le système. Il est alors nécessaire de prévoir un jeu J (fig 6) afin que la bague de répartition 3401 puisse se refermer et se verrouiller de nouveau à son retour sur les portions de cônes d'angle α.

L'angle β sera choisi assez faible pour éviter que l'effort de réarmement soit trop élevé et que l'utilisateur vienne alors faire glisser la bague fendue 320, un angle β de 5° à 20° convient bien.

La bague de répartition 3401 de ce second mode de réalisation doit être réalisée de préférence dans un thermoplastique ayant de très bonne propriétés de frottement afin d'assurer une bonne réversibilité mécanique des cônes d'angles α et β.

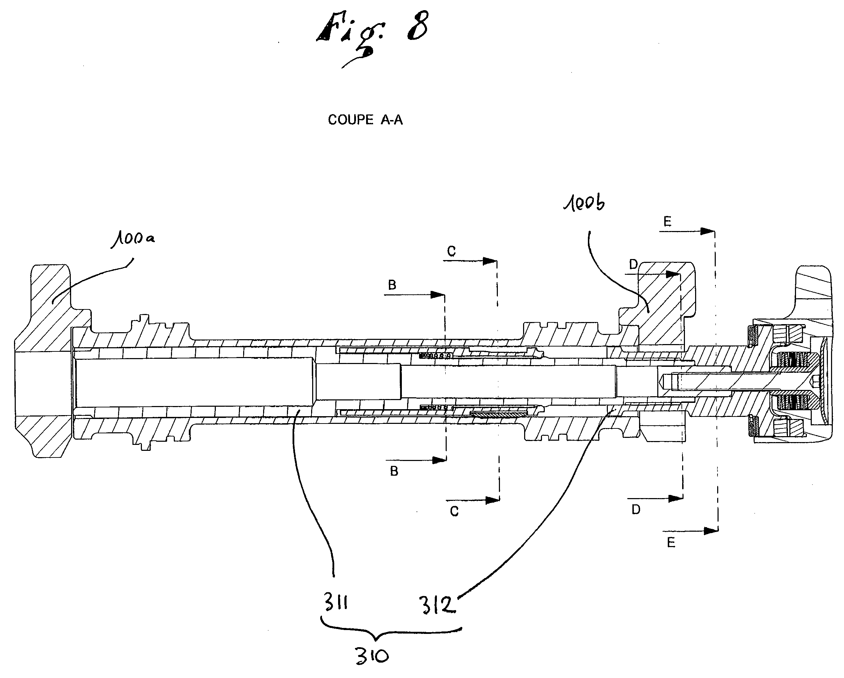

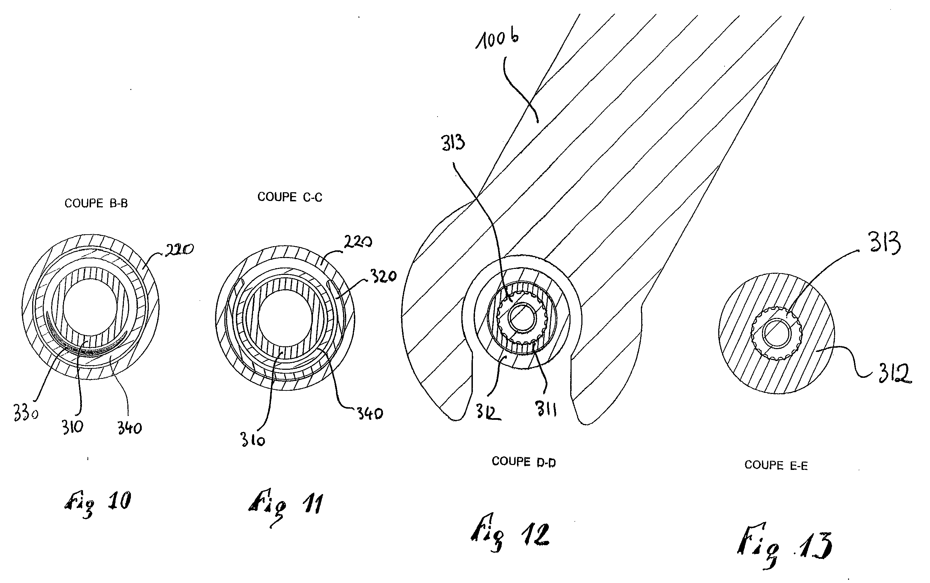

Un troisième exemple de réalisation de la présente invention va maintenant être décrit en référence aux figures 8 à 14.

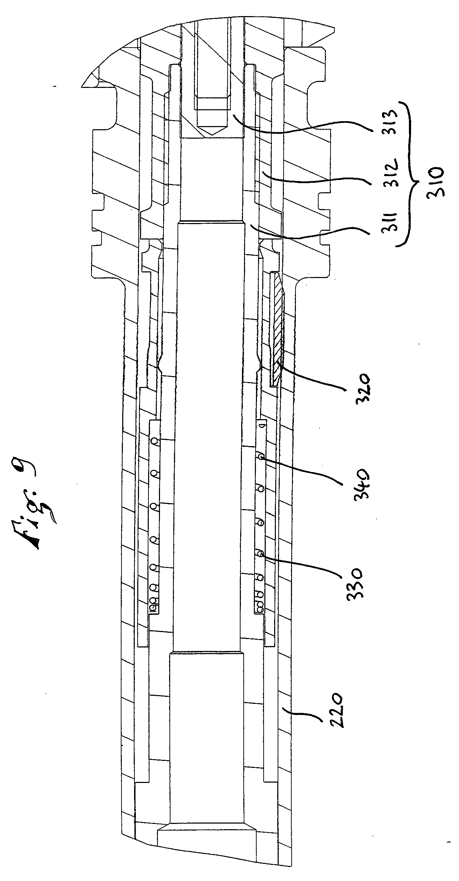

La figure 8 est une vue en coupe longitudinale, lorsque la broche est en position rétractée dans le moyeu. La figure 9, représente une coupe similaire agrandie lorsque la broche est vissée dans la fourche.

Dans cette version, la tige de broche 310 comprend plusieurs pièces distinctes qui sont assemblées les unes aux autres après que la bague tubulaire 320, la bague de répartition 340 et le ressort 330 soient placés dans la gorge 318.

Comme cela est visible aux figures 8, 9 et 11 et comme cela était le cas dans la version précédente, la bague de répartition 340 vient s'insérer radialement sous la bague tubulaire 320 et encadre cette dernière par deux appuis axiaux de manière à ce que bague tubulaire et bague de répartition soient solidaires longitudinalement.

De même, la bague de répartition 340 est également pourvue de moyens de rétention libérables qui permettent de maintenir la broche en position rétractée, contre la force de rappel du ressort 330. Ces moyens de rétractation libérables sont placés à une première extrémité de la bague de répartition et fonctionnent de manière similaire de ceux décrits dans le cadre du mode de réalisation précédent et ne seront pas décrits ici en détail.

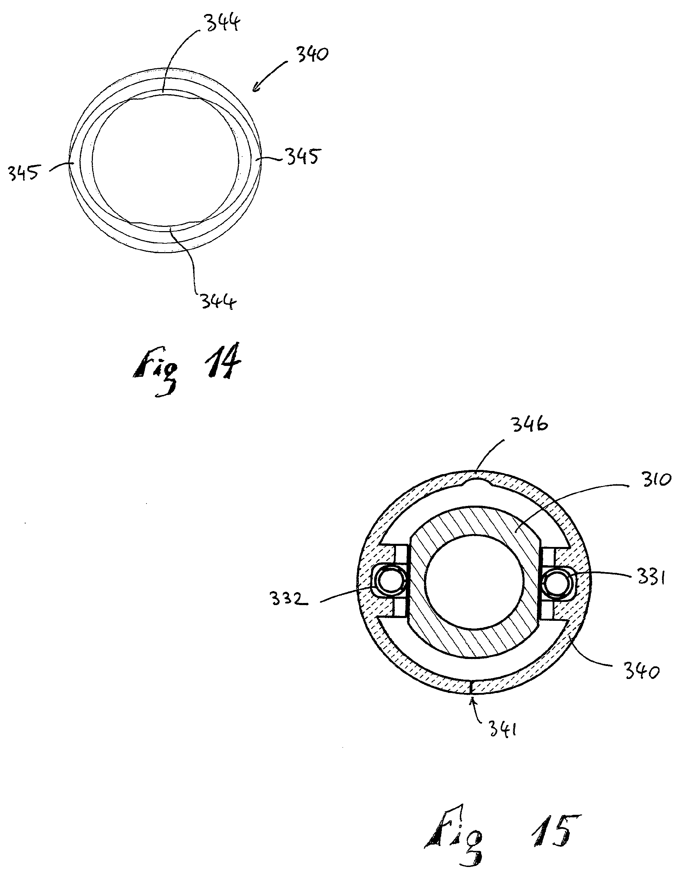

La bague de répartition présente néanmoins certaines particularités qui n'étaient pas présentes dans le deuxième mode de réalisation de l'invention. Tout d'abord, la première extrémité de celle-ci a, en section, une forme qui n'est pas exactement circulaire, mais qui s'apparente à celle d'une double ogive. Cette forme particulière, visible à la figure 14 définit deux points de contact 344, diamétralement opposés et situés à l'intersection des bases des deux ogives. Les sommets 345 des deux ogives constituent les deux autres points caractéristiques de la section de l'extrémité de la bague. Cette forme particulière garantit une déformation spécifique de la bague lorsque les points de contact glissent sur la portion de cône 3103 réalisée sur la tige de broche. Les deux points de contact s'écartent l'un de l'autre et les deux sommets d'ogive se rapprochent. Ainsi, la bague de rétention peut passer par-dessus la protrusion annulaire ménagée sur la tige.

L'autre particularité de la bague de répartition est qu'elle comprend une extension qui recouvre le ressort 330, et ce quelle que soit la position de la bague de répartition. Cette extension maintient le ressort en place et le protège des salissures.

Par ailleurs, la tige de broche 310 comprend une partie principale 311 et une partie d'extrémité 312 qui porte la poignée de la broche et qui est vissée à l'extrémité de la partie principale. Une goupille cannelée 313, insérée à l'intérieur de la partie principale 311 et de la partie d'extrémité 312 assure la transmission du couple entre les deux parties de la broche.

La construction en deux parties de la broche facilite le montage des différentes bagues et du ressort dans la gorge 318. Il n'est alors plus nécessaire de prévoir d'agrandir le diamètre du ressort et de la bague de répartition pour pouvoir les mettre en place dans la gorge.

La figure 15 décrit une vue en coupe d'un quatrième mode de réalisation de l'invention. Ce mode de réalisation est une variante du mode de réalisation précédent et la figure 14 est une coupe similaire à celle de la figure 9.

Le quatrième mode de réalisation de l'invention se différencie du troisième mode de réalisation par le fait que la tige de broche 310 est faite d'une seule pièce et que le ressort unique entourant la tige est remplacé par deux petits ressorts 331, 332 qui sont placés de part et d'autre de la tige de broche 310.

La bague de répartition 340 présente une fente 341 qui s'étend longitudinalement sur toute sa longueur ainsi qu'une zone d'affaiblissement 346 qui est diamétralement opposée à la fente. Il est donc possible d'ouvrir la bague de répartition pour permettre de mettre en place celle-ci avec les deux ressorts 331 et 332.

## Revendications

1. Broche de fixation (300) d'une roue sur un véhicule de type cycle, comprenant une tige (310) qui s'étend selon un axe longitudinal, une première extrémité qui comporte des moyens coopérant avec le cadre dudit véhicule et une deuxième extrémité qui comprend des moyens susceptibles d'exercer un couple de serrage
**caractérisée en ce que**,

   - ladite tige (310) comporte une gorge (318) dont l'extension selon ledit axe longitudinal a une longueur L1,
   - un élément de diamètre variable et de longueur L2, L2 étant inférieure à L1, est reçu dans la gorge (318) de manière à être mobile en translation selon l'axe longitudinal,

- un moyen élastique (330) contraint longitudinalement ledit élément de diamètre variable en direction de la deuxième extrémité.

2. Broche (300) selon la revendication 1, **caractérisée en ce que** l'élément de diamètre variable est un élément élastique.

3. Broche (300) selon la revendication 2, **caractérisée en ce que** sur l'ensemble de sa longueur, le diamètre extérieur de ladite tige (310), ne dépasse pas une valeur D1, **en ce que** le diamètre D2 de l'élément de diamètre variable lorsque qu'il est à l'état libre est supérieur au diamètre maximal de la tige D1.

4. Broche (300) selon la revendication précédente, **caractérisée en ce que** l'élément de diamètre variable est une bague tubulaire fendue (320).

5. Broche (300) selon l'une des revendications précédentes, **caractérisée en ce que** le moyen élastique qui contraint longitudinalement l'élément de diamètre variable est un ressort à spirales (330) de diamètre inférieur à D1.

6. Broche (300) selon la revendication précédente, **caractérisée en ce qu'**une bague de répartition (340) est interposée entre le ressort (330) et l'élément de diamètre variable.

7. Broche (300) selon l'une des revendications précédentes **caractérisée en ce que** les moyens placés à la première extrémité qui coopèrent avec le cadre du véhicule sont un filetage.

8. Broche (300) selon l'une des revendications précédentes, **caractérisée en ce que** les moyens placés à la deuxième extrémité qui sont susceptibles d'exercer un couple de serrage sont un levier et / ou une empreinte de clé.

9. Ensemble constitué par une broche (300) selon l'une des revendications 1 à 8, et un moyeu (200) d'une roue de véhicule, ledit moyeu (200) comportant un arbre creux (220), dont une portion au moins présente un diamètre intérieur D3 et dont les autres portions ont un diamètre intérieur supérieur à D3 ainsi qu'un corps de moyeu (210) monté rotatif sur l'arbre (220) ; **caractérisé en ce que** le diamètre D3 est supérieur au diamètre maximal de la tige D1 et D3 est inférieur au diamètre D2 de la bague (320) à l'état libre.

10. Ensemble broche (300) et moyeu (200) selon la revendication précédente, **caractérisé en ce que** des moyens de rétention libérable sont prévus entre le moyeu et la broche de manière à maintenir celle-ci dans une position déterminée par rapport au moyeu.

11. Ensemble selon la revendication précédente, **caractérisé en ce que** les moyens de rétention libérable comprennent une protrusion annulaire interne ménagée à l'intérieur de la bague de répartition (340) qui est apte à coopérer avec une protrusion annulaire externe ménagée à la superficie de la tige dans la gorge (318).

12. Ensemble selon la revendication précédente, **caractérisé en ce que** les protrusions annulaires comportent des portions coniques de demi-angle au sommet $\alpha$ compris entre 50° à 65°.

13. Broche selon l'une des revendications précédentes, **caractérisée en ce que** la tige (310) comprend deux parties distinctes qui sont assemblées l'une avec l'autre de telle manière que ladite gorge (318) soit placée à l'interface entre lesdites deux parties de broches.

14. Broche selon l'une des revendications 1 à 4 précédentes, **caractérisée en ce que** les moyens élastiques comprennent plusieurs ressorts disposés longitudinalement à la circonférence de la tige de broche.

Fig. 1

*Fig. 2*

EP 3 112 242 A1

Fig. 3

Fig. 4

IVb

IVb

*Fig: 4a*

*Fig: 4b*

Fig. 5

Fig. 5a

Fig. 5b

100 b
101 b
316
309
105

Fig. 5c

100 b
101 b
316
309

100 b
101 b
Fig. 3a
315
309
105

Fig. 6

Fig. 6a

EP 3 112 242 A1

Fig. 7

Fig. 8

COUPE A-A

Fig. 9

COUPE B-B — Fig 10
COUPE C-C — Fig 11
COUPE D-D — Fig 12
COUPE E-E — Fig 13

Fig 14

Fig 15

**Europäisches Patentamt**
**European Patent Office**
**Office européen des brevets**

# RAPPORT DE RECHERCHE EUROPEENNE

Numéro de la demande

EP 16 00 1408

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2008 012573 A1 (SAKAE ENGINEERING INC [JP]) 4 juin 2009 (2009-06-04) * alinéa [0022] - alinéa [0023]; figures 1-3 * | 1-10,13, 14 | INV. B62K25/02 |
| A | US 2005/110335 A1 (ROSE RUSSELL [US] ET AL) 26 mai 2005 (2005-05-26) * alinéa [0026] - alinéa [0026]; figures 1,2 * | 1,14 | |

**DOMAINES TECHNIQUES RECHERCHES (IPC)**

B62K

Le présent rapport a été établi pour toutes les revendications

| Lieu de la recherche | Date d'achèvement de la recherche | Examinateur |
|---|---|---|
| Munich | 21 octobre 2016 | Feber, Laurent |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**EP 3 112 242 A1**

**ANNEXE AU RAPPORT DE RECHERCHE EUROPEENNE
RELATIF A LA DEMANDE DE BREVET EUROPEEN NO.**

EP 16 00 1408

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-10-2016

| Document brevet cité au rapport de recherche | Date de publication | Membre(s) de la famille de brevet(s) | Date de publication |
|---|---|---|---|
| DE 102008012573 A1 | 04-06-2009 | CN 101445020 A | 03-06-2009 |
| | | DE 102008012573 A1 | 04-06-2009 |
| | | JP 5068634 B2 | 07-11-2012 |
| | | JP 2009132251 A | 18-06-2009 |
| | | TW 200922810 A | 01-06-2009 |
| | | US 2009140571 A1 | 04-06-2009 |
| US 2005110335 A1 | 26-05-2005 | CN 1784336 A | 07-06-2006 |
| | | CN 102582755 A | 18-07-2012 |
| | | EP 1633622 A1 | 15-03-2006 |
| | | TW I243762 B | 21-11-2005 |
| | | US 2005110335 A1 | 26-05-2005 |
| | | WO 2005051753 A1 | 09-06-2005 |

EPO FORM P0460

Pour tout renseignement concernant cette annexe : voir Journal Officiel de l'Office européen des brevets, No.12/82

25

**RÉFÉRENCES CITÉES DANS LA DESCRIPTION**

**Documents brevets cités dans la description**

- EP 0810944 A
- US 6089675 A
- US 20130270893 A
- EP 2070725 A